# EUROPEAN PATENT APPLICATION

(11) **EP 4 826 344 A1**
(43) Date of publication of application: **21.10.2026**
(21) Application number: 24909833.6
(22) Date of filing: 14.08.2024
(51) Int. Cl.: G01K 13/00

(54) **TEMPERATURE PROBE DATA PROCESSING METHOD AND RELATED DEVICE**

(30) Priority: 29.12.2023 CN 202311866788
(71) Applicant: Shenzhen Chenbei Technology Co., Ltd., Shenzhen, Guangdong 518000 (CN)
(72) Inventor: HUANG, Ming, Shenzhen, Guangdong 518000 (CN)
(74) Representative: Bayramoglu et al.
(86) International application number: PCT/CN2024/112006
(87) International publication number: WO 2025/138882

(57) **Abstract**

A temperature probe data processing method and a related device are provided to reduce the space occupied by temperature probe data. The method includes: acquiring temperature probe data, where the temperature probe data are internal temperature data of a target object sampled according to a preset time sequence, and/or external ambient temperature data of the target object sampled according to the preset time sequence, and each piece of internal temperature data and external ambient temperature data carries a timestamp; and when the temperature probe data at adjacent timestamps satisfy a preset condition, retaining the temperature probe data at a latter timestamp, and storing the temperature probe data at the latter timestamp in a first buffer, where the preset condition includes: an internal temperature change of the target object represented by the temperature probe data at the adjacent timestamps is greater than a first preset value, and/or an ambient temperature change of the target object represented by the temperature probe data at the adjacent timestamps is greater than a second preset value.

## Description

The present disclosure claims the priority to Chinese Patent Application No. 202311866788X, titled "TEMPERATURE PROBE DATA PROCESSING METHOD AND RELATED DEVICE", filed with the China National Intellectual Property Administration (CNIPA) on December 29, 2023, which is incorporated herein by reference in its entirety.

### TECHNICAL FIELD

The present disclosure relates to the technical field of microcontroller data processing, and in particular to a temperature probe data processing method and a related device.

### BACKGROUND TECHNOLOGY

A wireless temperature probe, as a device for detecting temperature, generally acquires temperature data of a target object, and then is communicatively connected to an application (APP) of a mobile phone to transmit the temperature data to the mobile phone.

When acquiring data, in order to ensure real-time performance of the data, the temperature probe generally acquires at least one piece of data per second. However, the temperature probe is small in size, and the storage space of its microcontroller is generally only a few kilobytes to tens of kilobytes. As the detection time increases, the data accumulates, resulting in insufficient storage space in the microcontroller.

### CONTENT OF THE INVENTION

An embodiment of the present disclosure provides a temperature probe data processing method and a related device. When a temperature probe acquires temperature data, the temperature probe data at a latter timestamp of adjacent timestamps is stored only when an internal temperature change of a target object acquired by the temperature probe at the adjacent timestamps is greater than a first preset value, or an ambient temperature change of the target object acquired by the temperature probe at the adjacent timestamps is greater than a second preset value. This reduces the data acquired by the temperature probe, thereby reducing the space occupied by the temperature probe data.

A first aspect of an embodiment of the present disclosure provides a temperature probe data processing method, including:
acquiring temperature probe data, where the temperature probe data are internal temperature data of a target object sampled according to a preset time sequence, and each piece of internal temperature data carries a timestamp; and/or the temperature probe data are external ambient temperature data of the target object sampled according to the preset time sequence, and each piece of external ambient temperature data carries a timestamp; and
when the temperature probe data at adjacent timestamps satisfy a preset condition, retaining the temperature probe data at a latter timestamp, and storing the temperature probe data at the latter timestamp in a first buffer, where the preset condition includes: an internal temperature change of the target object represented by the temperature probe data at the adjacent timestamps is greater than a first preset value, and/or an ambient temperature change of the target object represented by the temperature probe data at the adjacent timestamps is greater than a second preset value.

Optionally, if the temperature probe data at the adjacent timestamps do not satisfy the preset condition, the method further includes:
determining, based on existing temperature probe data, whether the target object is in a temperature rising trend;
if yes, acquiring the temperature probe data at the latter timestamp of the adjacent timestamps;
determining whether the temperature probe data at the latter timestamp is greater than a maximum value among the existing temperature probe data; and
if yes, replacing the maximum temperature probe data with the temperature probe data at the latter timestamp.

Optionally, the method further includes:
determining whether the acquired temperature probe data is first temperature probe data in the buffer; and
if yes, copying the first temperature probe data, and taking the copied first temperature probe data as temperature probe data at a timestamp adjacent to a timestamp of the first temperature probe data.

Optionally, the method further includes:
when temperature monitoring of the target object ends, if the first buffer includes temperature probe data of only two timestamps, updating the timestamp corresponding to the temperature probe data at a latter timestamp of the two timestamps to a current time.

Optionally, when an amount of the temperature probe data exceeds a storage space of the first buffer, the method further includes:
deleting part of the temperature probe data in the first buffer according to a preset deletion strategy, where the preset deletion strategy includes at least one of the following: one piece of temperature detection data is deleted after every N pieces of temperature probe data, temperature probe data to be deleted is less than a maximum value among the temperature probe data, and temperature probe data to be deleted is not temperature detection data at a last timestamp, where N≥1.

Optionally, the method further includes:
storing undeleted temperature probe data from the first buffer to a second buffer; and
storing subsequently acquired temperature probe data to the second buffer.

Optionally, when acquiring the temperature probe data, the method further includes:
determining whether the timestamp in the acquired temperature probe data satisfies the preset time sequence; and
if not, discarding the acquired temperature probe data.

A second aspect of the embodiment of the present disclosure provides a temperature probe data processing device, including:
an acquisition unit, configured to acquire temperature probe data, where the temperature probe data are internal temperature data of a target object sampled according to a preset time sequence, and each piece of internal temperature data carries a timestamp; and/or the temperature probe data are external ambient temperature data of the target object sampled according to the preset time sequence, and each piece of external ambient temperature data carries a timestamp; and
a storage unit, configured to, when the temperature probe data at adjacent timestamps satisfy a preset condition, retain the temperature probe data at a latter timestamp, and store the temperature probe data at the latter timestamp in a first buffer, where the preset condition includes: an internal temperature change of the target object represented by the temperature probe data at the adjacent timestamps is greater than a first preset value, and/or an ambient temperature change of the target object represented by the temperature probe data at the adjacent timestamps is greater than a second preset value.

Preferably, the device further includes:
a determination unit, configured to, if the temperature probe data at the adjacent timestamps do not satisfy the preset condition,
determine, based on existing temperature probe data, whether the target object is in a temperature rising trend;
where, the acquisition unit is further configured to, if the target object is in the temperature rising trend, acquire the temperature probe data at the latter timestamp of the adjacent timestamps;
the determination unit is further configured to determine whether the temperature probe data at the latter timestamp is greater than a maximum value among the existing temperature probe data; and
the storage unit is further configured to, if the temperature probe data at the latter timestamp is greater than the maximum value among the existing temperature probe data, replace the maximum temperature probe data with the temperature probe data at the latter timestamp.

Preferably, the determination unit is further configured to:
determine whether the acquired temperature probe data is first temperature probe data in the buffer;
the device further includes:
   a copying unit, configured to copy the first temperature probe data, and take the copied first temperature probe data as temperature probe data at a timestamp adjacent to a timestamp of the first temperature probe data;
   an update unit, configured to, when temperature monitoring of the target object ends, if the first buffer includes temperature probe data of only two timestamps, update the timestamp corresponding to the temperature probe data at a latter timestamp of the two timestamps to a current time;
   a deletion unit, configured to, when an amount of the temperature probe data exceeds a storage space of the first buffer, delete part of the temperature probe data in the first buffer according to a preset deletion strategy, where the preset deletion strategy includes at least one of the following: one piece of temperature detection data is deleted after every N pieces of temperature probe data, temperature probe data to be deleted is less than a maximum value among the temperature probe data, and temperature probe data to be deleted is not temperature detection data at a last timestamp, where N≥1;
   the storage unit is further configured to:
      store undeleted temperature probe data from the first buffer to a second buffer; and
      store subsequently acquired temperature probe data to the second buffer.

Preferably, the determination unit is further configured to:
determine whether the timestamp in the acquired temperature probe data satisfies the preset time sequence; and
the device further includes:
   a discarding unit, configured to, if the acquired temperature probe data does not satisfy the preset time sequence, discard the acquired temperature probe data.

A third aspect of the embodiment of the present disclosure provides a computer device, including a processor, where the processor, when executing a computer program stored in a memory, is configured to implement the temperature probe data processing method according to the first aspect of the embodiment of the present disclosure.

The embodiment of the present disclosure further provides a computer-readable storage medium, configured to store a computer program, where the computer program, when executed by a processor, is configured to implement the temperature probe data processing method according to the first aspect of the embodiment of the present disclosure.

From the above technical solutions, the embodiment of the present disclosure has the following advantages:
In the embodiment of the present disclosure, the temperature probe data are acquired. The temperature probe data are internal temperature data of a target object sampled according to a preset time sequence, and/or external ambient temperature data of the target object sampled according to the preset time sequence. Each piece of temperature data carries a timestamp. When the temperature probe data at adjacent timestamps satisfy a preset condition, the temperature probe data at a latter timestamp is retained, and the temperature probe data at the latter timestamp is stored in a first buffer. The preset condition includes: an internal temperature change of the target object represented by the temperature probe data at the adjacent timestamps is greater than a first preset value, and/or an ambient temperature change of the target object represented by the temperature probe data at the adjacent timestamps is greater than a second preset value.

That is, in the embodiment of the present disclosure, only when the internal temperature change of the target object acquired at the adjacent timestamps is greater than the first preset value, and/or the external ambient temperature change of the target object acquired at the adjacent timestamps is greater than the second preset value, the temperature data at the latter timestamp of the adjacent timestamps is stored. This reduces the temperature data acquired by the temperature probe, thereby avoiding the problem of insufficient storage space of the microcontroller caused by excessive temperature probe data.

### DESCRIPTION OF THE DRAWINGS

FIG. 1 is a schematic diagram of an embodiment of a temperature probe data processing method according to an embodiment of the present disclosure;
FIG. 2 is a schematic diagram of another embodiment of the temperature probe data processing method according to an embodiment of the present disclosure;
FIG. 3 is a schematic diagram of another embodiment of the temperature probe data processing method according to an embodiment of the present disclosure;
FIG. 4 is a schematic diagram of another embodiment of the temperature probe data processing method according to an embodiment of the present disclosure; and
FIG. 5 is a schematic diagram of an embodiment of a temperature probe data processing device according to an embodiment of the present disclosure.

### SPECIFIC IMPLEMENTATIONS

An embodiment of the present disclosure provides a temperature probe data processing method and a related device. When a temperature probe acquires temperature data, the temperature probe data at a latter timestamp of adjacent timestamps is stored only when an internal temperature change of a target object acquired by the temperature probe at the adjacent timestamps is greater than a first preset value, or an ambient temperature change of the target object acquired by the temperature probe at the adjacent timestamps is greater than a second preset value. This reduces the data acquired by the temperature probe, thereby reducing the space occupied by the temperature probe data.

To enable those skilled in the art to better understand the solutions of the present disclosure, the technical solutions in the embodiments of the present disclosure will be clearly and completely described below in conjunction with the drawings in the embodiments of the present disclosure. Obviously, the described embodiments are only a part of, not all of, the embodiments of the present disclosure. All other embodiments obtained by those of ordinary skill in the art based on the embodiments of the present disclosure without creative efforts should fall within the protection scope of the present disclosure.

The terms "first", "second", "third", "fourth" and so on in the specification, claims and the drawings of the present disclosure are intended to distinguish between similar objects but do not necessarily indicate a specific order or sequence. It should be understood that the data used in such a manner may be exchanged under proper conditions to make it possible for the described embodiments of the present disclosure to be implemented in a sequence except those illustrated herein. Moreover, the terms "include", "has", and any variants thereof refer to non-exclusive inclusion, for example, a process, method that includes a series of steps or a system, product, or device includes a series of units are not necessarily limited to those steps or units which are clearly listed, but may include other steps or units which are not expressly listed or inherent to such a process, method, system, product, or device.

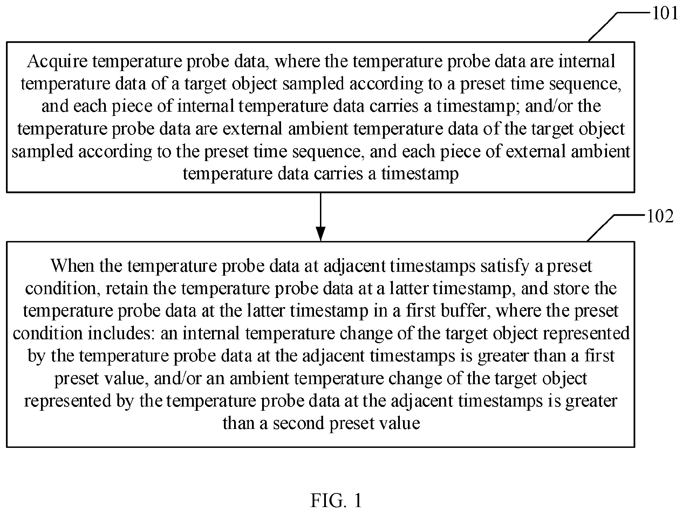

For ease of understanding, the temperature probe data processing method in the embodiment of the present disclosure is described below. Referring to FIG. 1, an embodiment of the temperature probe data processing method in the embodiment of the present disclosure includes the following steps.

101. Temperature probe data are acquired, where the temperature probe data are internal temperature data of a target object sampled according to a preset time sequence, and each piece of internal temperature data carries a timestamp; and/or the temperature probe data are external ambient temperature data of the target object sampled according to the preset time sequence, and each piece of external ambient temperature data carries a timestamp.

In practice, a part of a temperature probe is generally inserted into the target object to measure the internal temperature of the target object, while the remaining part of the temperature probe is left outside the target object to measure the ambient temperature of the target object.

For example, when the target object is food, part of the probe is generally inserted into the food to measure the internal temperature of the food, while the remaining part of the probe is left outside the food to measure the ambient temperature of the food, i.e., the external temperature of the food.

As a method for acquiring data by a temperature probe, in order to ensure that the temperature data acquired by the temperature probe can reflect the real-time change process of the internal temperature of the target object, when operating, the temperature probe generally acquires internal temperature data of the target object according to a preset time sequence, or acquires ambient temperature data of the target object according to a preset time sequence. The preset time sequence can be set according to actual conditions, such as acquiring temperature data once 1 second, or once every 2 seconds, i.e., the time interval of the preset time sequence is not specifically limited in the embodiment of the present disclosure.

When acquiring data, the temperature probe generally stores the acquired temperature data according to a preset format, e.g., the temperature data acquired each time carries a timestamp to indicate the time when the temperature is acquired.

102. When the temperature probe data at adjacent timestamps satisfy a preset condition, the temperature probe data at a latter timestamp is retained, and the temperature probe data at the latter timestamp is stored in a first buffer, where the preset condition includes: an internal temperature change of the target object represented by the temperature probe data at the adjacent timestamps is greater than a first preset value, and/or an ambient temperature change of the target object represented by the temperature probe data at the adjacent timestamps is greater than a second preset value.

Specifically, acquiring a large amount of temperature data when adjacent timestamps are too close leads to the problem of insufficient storage space of the microcontroller. To solve the problem, when acquiring temperature probe data, the present disclosure only retains the temperature probe data at a latter timestamp of the adjacent timestamps when the temperature probe data at adjacent timestamps satisfy a preset condition, and stores the temperature probe data at the latter timestamp in a first buffer of the microcontroller. The preset condition includes: an internal temperature change of the target object represented by the temperature probe data at the adjacent timestamps is greater than a first preset value, and/or an external ambient temperature change of the target object represented by the temperature probe data at the adjacent timestamps is greater than a second preset value.

For example, when the temperature data are acquired by the temperature probe, only when the internal temperature change of the target object acquired at adjacent timestamps is greater than 1°C, and/or the external ambient temperature change of the target object acquired at adjacent timestamps is greater than 5°C, the temperature probe data at the latter timestamp of the adjacent timestamps is retained. This avoids the problem of insufficient storage space of the microcontroller caused by excessive acquired temperature probe data.

Furthermore, in order to avoid temperature data errors, when acquiring temperature probe data, the embodiment of the present disclosure needs to determine whether the timestamp in the temperature probe data satisfies the preset time sequence. If the acquired temperature probe data does not satisfy the preset time sequence, the acquired temperature probe data is discarded.

For example, it is assumed that the temperature probe acquires temperature data once 1 second, and the temperature data at the previous timestamp is temperature data acquired at the 5^{th} second. If the currently acquired temperature probe data is temperature data acquired at the 4^{th} second, then the current temperature data is determined to be invalid or erroneous data, and the temperature data is discarded.

Specifically, the type of the temperature probe data in the step 101 and the preset condition in the step 102 correspond to each other. For example, when the temperature probe data is the internal temperature data of the target object sampled according to the preset time sequence, the preset condition is that the internal temperature change of the target object represented by the temperature probe data at the adjacent timestamps is greater than the first preset value. When the temperature probe data is the external ambient temperature data of the target object sampled according to the preset time sequence, the preset condition is that the ambient temperature change of the target object represented by the temperature probe data at the adjacent timestamps is greater than the second preset value. When the temperature probe data includes both the internal temperature data of the target object sampled according to the preset time sequence and the external ambient temperature data of the target object sampled according to the preset time sequence, the preset condition can be that the internal temperature change of the target object represented by the temperature probe data at the adjacent timestamps is greater than the first preset value, or that the ambient temperature change of the target object represented by the temperature probe data at the adjacent timestamps is greater than the second preset value, or that the internal temperature change of the target object represented by the temperature probe data at the adjacent timestamps is greater than the first preset value and the ambient temperature change of the target object represented by the temperature probe data at the adjacent timestamps is greater than the second preset value. The condition depends on the actual situation, and no specific limitation is made here.

In the embodiment of the present disclosure, the temperature probe data are acquired. The temperature probe data are internal temperature data of a target object sampled according to a preset time sequence, and/or external ambient temperature data of the target object sampled according to the preset time sequence. Each piece of temperature data carries a timestamp. When the temperature probe data at adjacent timestamps satisfy a preset condition, the temperature probe data at a latter timestamp is retained, and the temperature probe data at the latter timestamp is stored in a first buffer. The preset condition includes: an internal temperature change of the target object represented by the temperature probe data at the adjacent timestamps is greater than a first preset value, and/or an ambient temperature change of the target object represented by the temperature probe data at the adjacent timestamps is greater than a second preset value.

That is, in the embodiment of the present disclosure, only when the internal temperature change of the target object acquired at the adjacent timestamps is greater than the first preset value, and/or the external ambient temperature change of the target object acquired at the adjacent timestamps is greater than the second preset value, the temperature data at the latter timestamp of the adjacent timestamps is stored. This reduces the temperature data acquired by the temperature probe, thereby avoiding the problem of insufficient storage space of the microcontroller caused by excessive temperature probe data.

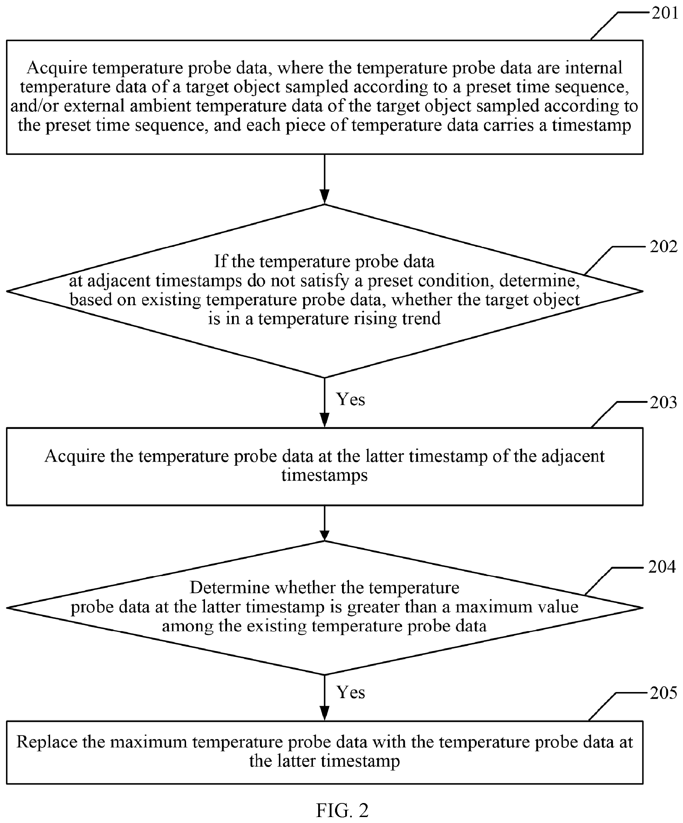

Based on the embodiment described according to FIG. 1, if the internal temperature change of the target object is too slow, making it difficult for the temperature data at adjacent timestamps to satisfy the condition that the internal temperature change of the target object is greater than the first preset value, and/or making it difficult for the temperature data at adjacent timestamps to satisfy the condition that the ambient temperature change of the target object is greater than the second preset value, then the temperature probe cannot acquire effective temperature change data. When acquiring temperature probe data, the embodiment of the present disclosure may further perform the following steps shown in FIG. 2. FIG. 2 is another embodiment of the temperature probe data processing method.

201. Temperature probe data are acquired. The temperature probe data are internal temperature data of a target object sampled according to a preset time sequence, and/or external ambient temperature data of the target object sampled according to the preset time sequence. Each piece of temperature data carries a timestamp.

The step 201 is similar to the step 101 and is not repeated here.

202. If the temperature probe data at the adjacent timestamps do not satisfy the preset condition, it is determined, based on existing temperature probe data, whether the target object is in a temperature rising trend. If yes, step 203 is executed.

If the change in the internal and/or external ambient temperature of the target object is slow such that the temperature data at the adjacent timestamps does not satisfy the preset condition, it is determined, based on the existing temperature probe data, whether the target object is in a temperature rising trend.

Specifically, when it is determined whether the target object is in a temperature rising trend, it may be determined whether the acquired temperature probe data is gradually increasing, or increasing in a spiral manner, as long as the temperature of the target object is in a rising state.

203. The temperature probe data at the latter timestamp of the adjacent timestamps is acquired.

If it is determined that the target object is in a temperature rising trend, the temperature probe data at the latter timestamp of the adjacent timestamps is acquired, and step 204 is executed on the acquired temperature probe data at the latter timestamp.

204. It is determined whether the temperature probe data at the latter timestamp is greater than a maximum value among the existing temperature probe data, and if yes, step 205 is executed.

It is determined whether the acquired temperature probe data at the latter timestamp of the adjacent timestamps is greater than the maximum value among the existing temperature probe data, and if yes, the step 205 is executed.

205. The maximum temperature probe data is replaced with the temperature probe data at the latter timestamp.

If the acquired temperature probe data at the latter timestamp of the adjacent timestamps is greater than the maximum value among the existing temperature probe data, the maximum temperature probe data is replaced with the temperature probe data at the latter timestamp, such that the acquired temperature probe data retains the maximum temperature value of the target object.

For ease of understanding, an example is given below:
Assume that the existing temperature probe data include: 1s-12°C (meaning the temperature data acquired at the first second is 12°C), 5 s-12.4°C, 6 s-12.5°C, and 8 s-12.6°C, and assume that the temperature data acquired at the 9^{th} second is 12.61°C, i.e., then the change in the temperature data at adjacent timestamps does not satisfy the preset condition (assuming the preset condition is that the temperature change at adjacent timestamps is greater than 1°C). In this case, 8 s-12.6°C is replaced with 9 s-12.61°C, thereby reflecting the maximum temperature of the target object without increasing the amount of data.

In the embodiment of the present disclosure, when the temperature change of the target object is too slow such that the temperature change of the target object does not satisfy the preset condition, a temperature value reflecting the internal temperature change of the target object can also be acquired, thereby achieving measurement of the temperature change trend of the target object.

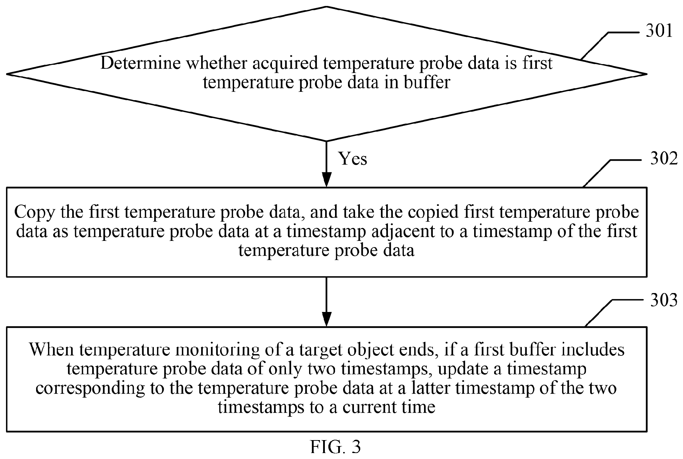

Based on the embodiment described according to FIG. 1, assuming that the target object shown in FIG. 1 fails, resulting in no temperature change inside the target object, in order to reflect the temperature change trend of the target object, the embodiment of the present disclosure may further perform the following steps. Referring to FIG. 3, another embodiment of the temperature probe data processing method in the embodiment of the present disclosure includes the following steps.

301. It is determined whether the acquired temperature probe data is first temperature probe data in the buffer, and if yes, step 302 is executed.

In order to reflect the temperature change trend of the target object when the target object fails, resulting in no temperature change inside the target object, when acquiring temperature probe data, the embodiment of the present disclosure determines whether the temperature probe data is the first temperature probe data. Specifically, when determining the first temperature probe data, the determination may be made based on the timestamp of the temperature probe data, or by determining whether temperature probe data is already stored in the first buffer. If no temperature probe data is stored in the first buffer, it indicates that the temperature probe data is the first temperature probe data. Otherwise, it indicates that the temperature probe data is not the first temperature probe data.

302. The first temperature probe data is copied, and the copied first temperature probe data is taken as temperature probe data at a timestamp adjacent to a timestamp of the first temperature probe data.

If the temperature probe data is the first temperature probe data, in order to avoid internal failure of the target object, the embodiment of the present disclosure can also acquire the temperature change trend of the target object. The embodiment of the present disclosure copies the first temperature probe data and takes the copied first temperature probe data as the temperature probe data at the timestamp adjacent to the timestamp of the first temperature probe data.

303. When temperature monitoring of the target object ends, if the first buffer includes temperature probe data of only two timestamps, the timestamp corresponding to the temperature probe data at a latter timestamp of the two timestamps is updated to a current time.

When temperature monitoring of the target object ends, if the first buffer includes the temperature probe data of only two timestamps, it indicates that it is highly likely that the target object has failed, resulting in no temperature change inside the target object. The embodiment of the present disclosure then updates the timestamp corresponding to the temperature probe data at the latter timestamp of the two timestamps to the current time, such that the temperature change of the target object can be reflected based on the time change.

In the embodiment of the present disclosure, the first temperature probe data is copied twice, and the copied first temperature probe data is taken as temperature probe data at a timestamp adjacent to the timestamp of the first temperature probe data. When the first buffer includes only two pieces of temperature probe data, the timestamp corresponding to the temperature probe data at the latter timestamp is updated to the current time, thereby enabling normal measurement of the internal temperature trend of the target object even when the target object fails.

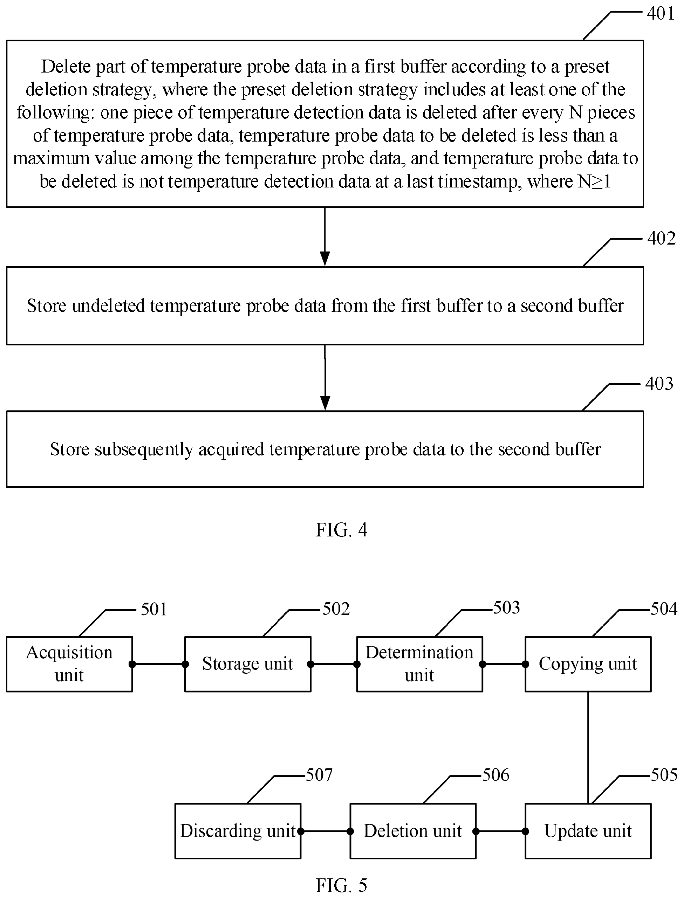

Based on the embodiment described according to FIG. 1, if the acquired temperature probe data fills up the storage space of the first buffer, the embodiment of the present disclosure deletes part of the temperature probe data in the first buffer according to a preset deletion strategy, thereby making full use of the buffer in the microcontroller while preserving the temperature trend of the target object. Referring to FIG. 4, another embodiment of the temperature probe data processing method in the embodiment of the present disclosure includes the following steps.

401. Part of the temperature probe data in the first buffer is deleted according to a preset deletion strategy, where the preset deletion strategy includes at least one of the following: one piece of temperature detection data is deleted after every N pieces of temperature probe data, temperature probe data to be deleted is less than a maximum value among the temperature probe data, and temperature probe data to be deleted is not temperature detection data at a last timestamp, where N≥1.

When the temperature probe data in the first buffer of the microcontroller overflows, the embodiment of the present disclosure deletes part of the temperature probe data in the first buffer according to a preset deletion strategy, where the preset deletion strategy includes at least one of the following: one piece of temperature detection data is deleted after every N pieces of temperature probe data, temperature probe data to be deleted is less than a maximum value among the temperature probe data, and temperature probe data to be deleted is not temperature detection data at a last timestamp.

Specifically, data before deletion are listed in Table 1, and data after deletion are listed in Table 2:

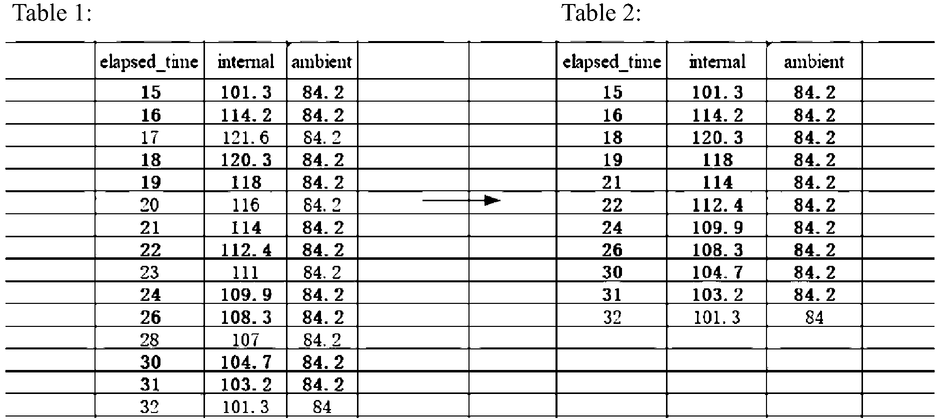

The deletion strategy for the temperature probe data in Table 1 is to delete one piece of data after every two pieces of data, and the deleted data is not the temperature probe data at the last timestamp.

402. Undeleted temperature probe data from the first buffer is stored to a second buffer.

It should be noted that when the microcontroller stores data, it stores data in order. Therefore, after data is deleted, a blank area is left. Hence, after deleting the temperature probe data in Table 1 (i.e., the first buffer), the embodiment of the present disclosure stores the temperature probe data from Table 1 to Table 2 (i.e., the second buffer), and automatically stores subsequently acquired temperature probe data to the second buffer, to prevent data storage errors.

403. Subsequently acquired temperature probe data are stored to the second buffer.

In order to prevent storage address errors for subsequently acquired temperature probe data, the embodiment of the present disclosure stores the subsequently acquired temperature probe data to the second buffer, thereby ensuring the integrity and accuracy of the temperature probe data.

In the embodiment of the present disclosure, in order to avoid wasting space in the blank area of the first buffer after deleting part of the temperature probe data, the embodiment of the present disclosure provides the first buffer and the second buffer, stores the undeleted temperature probe data from the first buffer to the second buffer, and stores the subsequently acquired temperature probe data to the second buffer. This avoids waste of storage space in the buffer and ensures the integrity and accuracy of the temperature probe data.

The temperature probe data processing method in the embodiment of the present disclosure is described in detail above. Then a temperature probe data processing device in the embodiment of the present disclosure is described in detail. Referring to FIG. 5, an embodiment of the temperature probe data processing device in the embodiment of the present disclosure includes:
the acquisition unit 501, configured to acquire temperature probe data, where the temperature probe data are internal temperature data of a target object sampled according to a preset time sequence, and each piece of internal temperature data carries a timestamp; and/or the temperature probe data are external ambient temperature data of the target object sampled according to the preset time sequence, and each piece of external ambient temperature data carries a timestamp; and
the storage unit 502, configured to, when the temperature probe data at adjacent timestamps satisfy a preset condition, retain the temperature probe data at a latter timestamp, and store the temperature probe data at the latter timestamp in a first buffer, where the preset condition includes: an internal temperature change of the target object represented by the temperature probe data at the adjacent timestamps is greater than a first preset value, and/or an ambient temperature change of the target object represented by the temperature probe data at the adjacent timestamps is greater than a second preset value.

Preferably, the device further includes:
the determination unit 503, configured to, if the temperature probe data at the adjacent timestamps do not satisfy the preset condition,
determine, based on existing temperature probe data, whether the target object is in a temperature rising trend;
where, the acquisition unit 501 is further configured to, if the target object is in the temperature rising trend, acquire the temperature probe data at the latter timestamp of the adjacent timestamps;
the determination unit 503 is further configured to determine whether the temperature probe data at the latter timestamp is greater than a maximum value among the existing temperature probe data; and
the storage unit 502 is further configured to, if the temperature probe data at the latter timestamp is greater than the maximum value among the existing temperature probe data, replace the maximum temperature probe data with the temperature probe data at the latter timestamp.

Preferably, the determination unit 503 is further configured to:
determine whether the acquired temperature probe data is first temperature probe data in the buffer;
the device further includes:
   the copying unit 504, configured to copy the first temperature probe data, and take the copied first temperature probe data as temperature probe data at a timestamp adjacent to a timestamp of the first temperature probe data;
   the update unit 505, configured to, when temperature monitoring of the target object ends, if the first buffer includes temperature probe data of only two timestamps, update the timestamp corresponding to the temperature probe data at a latter timestamp of the two timestamps to a current time; and
   the deletion unit 506, configured to, when an amount of the temperature probe data exceeds a storage space of the first buffer, delete part of the temperature probe data in the first buffer according to a preset deletion strategy, where the preset deletion strategy includes at least one of the following: one piece of temperature detection data is deleted after every N pieces of temperature probe data, temperature probe data to be deleted is less than a maximum value among the temperature probe data, and temperature probe data to be deleted is not temperature detection data at a last timestamp, where N≥1.

The storage unit 502 is further configured to:
store undeleted temperature probe data from the first buffer to a second buffer; and
store subsequently acquired temperature probe data to the second buffer.

Preferably, the determination unit 503 is further configured to:
determine whether the timestamp in the acquired temperature probe data satisfies the preset time sequence.

The device further includes:
the discarding unit 507, configured to, if the acquired temperature probe data does not satisfy the preset time sequence, discard the acquired temperature probe data.

In the embodiment of the present disclosure, the temperature probe data are acquired via the acquisition unit 501. The temperature probe data are internal temperature data of a target object sampled according to a preset time sequence, and each piece of internal temperature data carries a timestamp; and/or the temperature probe data are external ambient temperature data of the target object sampled according to the preset time sequence, and each piece of external ambient temperature data carries a timestamp. When the temperature probe data at adjacent timestamps satisfy a preset condition, the temperature probe data at a latter timestamp is retained via the storage unit 502, and the temperature probe data at the latter timestamp is stored in a first buffer. The preset condition includes: an internal temperature change of the target object represented by the temperature probe data at the adjacent timestamps is greater than a first preset value, and/or an ambient temperature change of the target object represented by the temperature probe data at the adjacent timestamps is greater than a second preset value.

That is, in the embodiment of the present disclosure, only when the internal temperature change of the target object acquired at the adjacent timestamps is greater than the first preset value, and/or the external ambient temperature change of the target object acquired at the adjacent timestamps is greater than the second preset value, the temperature data at the latter timestamp of the adjacent timestamps is stored. This reduces the temperature data acquired by the temperature probe, thereby avoiding the problem of insufficient storage space of the microcontroller caused by excessive temperature probe data.

The temperature probe data processing device in the embodiment of the present disclosure is described above from the perspective of modular functional entities. The following describes a computer device in the embodiment of the present disclosure from the perspective of hardware processing.

The computer device is configured to achieve a function of the temperature probe data processing device, and an embodiment of the computer device in the embodiment of the present disclosure includes:
a processor and a memory.

The memory is configured to store a computer program, and the processor is configured to execute the computer program stored in the memory, so as to implement the steps shown in FIGS. 1 to 4.

It can be understood that, when the processor in the computer device executes the computer program, the functions of the units in the corresponding device embodiments can also be implemented, and details are not repeated here. For example, the computer program may be divided into one or more modules/units. The one or more modules/units are stored in the memory and executed by the processor to complete the present disclosure. The one or more modules/units may be one or more computer program instruction segments capable of completing specific functions, and the one or more instruction segments are used for describing an execution process of the computer program in the temperature probe data processing device. For example, the computer program can be divided into the units in the temperature probe data processing device, and each unit can implement the specific functions described in the description of the corresponding temperature probe data processing device.

The computer device may be a computing device such as a desktop computer, a notebook, a palmtop computer or a cloud server. The computer device may include, but is not limited to, a processor and a memory. Those skilled in the art can understand that the processor and memory show only an example of the computer device, does not constitute a limitation to the computer device, and may include more or fewer components. Alternatively, components may be combined, or different components may be used. For example, the computer device may further include input and output devices, a network access device, and a bus.

The processor may be a Central Processing Unit (CPU), and may also be another general-purpose processor, a Digital Signal Processor (DSP), an Application Specific Integrated Circuit (ASIC), a Field-Programmable Gate Array (FPGA) or another programmable logic device, a discrete gate or transistor logic device, a discrete hardware component, or the like. The general-purpose processor may be a microprocessor, or any conventional processor. The processor is a control center of the computer device, and various parts of the whole computer device are connected by using various interfaces and lines.

The memory may be configured to store the computer program and/or modules. The processor implements various functions of the computer device by running or executing the computer program and/or modules stored in the memory and invoking data stored in the memory. The memory may mainly include a program storage area and a data storage area. The program storage area may store an operating system, and an application required by at least one function; and the data storage area may store data that is created based on use of the mobile terminal, and the like. In addition, the memory may include a high-speed random access memory, and may further include a non-volatile memory, such as a hard disk, an internal storage, a plug-in hard disk, a smart media card (SMC), a secure digital (SD) card, a flash card, at least one magnetic disk storage device, a flash memory device, or another volatile solid-state storage device.

The present disclosure further provides a computer-readable storage medium. The computer-readable storage medium is configured to achieve a function of the temperature probe data processing device and store a computer program. The computer program is executed by a processor to implement the steps shown in FIGS. 1 to 4.

It is understandable that the integrated unit, if implemented in the form of a software functional unit and sold or used as a stand-alone product, may be stored in a corresponding computer-readable storage medium. Based on such an understanding, all or some of processes for implementing the methods in the foregoing corresponding embodiments of the present disclosure may be completed by a computer program instructing relevant hardware. The computer program may be stored in a computer-readable storage medium. When the computer program is executed by the processor, the steps in the foregoing method embodiments may be implemented. The computer program includes computer program code. The computer program code may be in a form of source code, in a form of object code, an executable file, in some intermediate forms, or the like. The computer-readable medium may include: any physical entity or device capable of carrying computer program code, a recording medium, a universal serial bus (USB) flash disk, a mobile hard disk drive, a magnetic disk, an optical disc, a computer memory, a read-only memory (ROM), a random access memory (RAM), an electrical carrier signal, a telecommunications signal, and a software distribution medium, etc. It should be noted that, the content in the computer-readable medium may be added or deleted properly according to the legislation and the patent practice in the jurisdiction. For example, in some jurisdictions, depending on the legislation and the patent practice, the computer-readable medium may not include the electrical carrier signal or the telecommunications signal.

A person skilled in the art may clearly understand that, for ease and brevity of description, reference may be made to corresponding processes in the foregoing method embodiments for specific operating processes of the foregoing systems, devices, and units. Details are not described herein.

In several embodiments provided in the present disclosure, it should be understood that the disclosed system, device, and method may be implemented in other manners. For example, the described device embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the devices or units may be implemented in electrical, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions in the embodiments.

In addition, functional units in the embodiments of the present disclosure may be integrated into one processing unit, each of the units may exist alone physically, or two or more units may be integrated into one unit. The above integrated unit may be implemented either in a form of hardware or in a form of a software functional unit.

The above embodiments are provided merely to describe the technical solutions of the present disclosure, and are not intended to limit the present disclosure. Although the present disclosure is described in detail with reference to the above embodiments, those of ordinary skill in the art should understand that they can still modify the technical solutions described in the above embodiments, or make equivalent substitutions to some technical features therein. These modifications or substitutions do not make the essence of the corresponding technical solutions depart from the spirit and scope of the technical solutions of the embodiments of the present disclosure.

## Claims

1. A temperature probe data processing method, **characterized by** comprising:
acquiring temperature probe data, wherein the temperature probe data are internal temperature data of a target object sampled according to a preset time sequence, and each piece of internal temperature data carries a timestamp; and/or the temperature probe data are external ambient temperature data of the target object sampled according to the preset time sequence, and each piece of external ambient temperature data carries a timestamp; and
when the temperature probe data at adjacent timestamps satisfy a preset condition, retaining the temperature probe data at a latter timestamp, and storing the temperature probe data at the latter timestamp in a first buffer, wherein the preset condition comprises: an internal temperature change of the target object represented by the temperature probe data at the adjacent timestamps is greater than a first preset value, and/or an ambient temperature change of the target object represented by the temperature probe data at the adjacent timestamps is greater than a second preset value.

2. The method according to claim 1, **characterized in that** if the temperature probe data at the adjacent timestamps do not satisfy the preset condition, the method further comprises:
determining, based on existing temperature probe data, whether the target object is in a temperature rising trend;
if yes, acquiring the temperature probe data at the latter timestamp of the adjacent timestamps;
determining whether the temperature probe data at the latter timestamp is greater than a maximum value among the existing temperature probe data; and
if yes, replacing the maximum temperature probe data with the temperature probe data at the latter timestamp.

3. The method according to claim 1, **characterized in that** the method further comprises:
determining whether the acquired temperature probe data is first temperature probe data in the buffer; and
if yes, copying the first temperature probe data, and taking the copied first temperature probe data as temperature probe data at a timestamp adjacent to a timestamp of the first temperature probe data.

4. The method according to claim 3, **characterized in that** the method further comprises:
when temperature monitoring of the target object ends, if the first buffer comprises temperature probe data of only two timestamps, updating the timestamp corresponding to the temperature probe data at a latter timestamp of the two timestamps to a current time.

5. The method according to claim 1, **characterized in that** when an amount of the temperature probe data exceeds a storage space of the first buffer, the method further comprises:
deleting part of the temperature probe data in the first buffer according to a preset deletion strategy, wherein the preset deletion strategy comprises at least one of the following: one piece of temperature detection data is deleted after every N pieces of temperature probe data, temperature probe data to be deleted is less than a maximum value among the temperature probe data, and temperature probe data to be deleted is not temperature detection data at a last timestamp, wherein N≥1.

6. The method according to claim 5, **characterized in that** the method further comprises:
storing undeleted temperature probe data from the first buffer to a second buffer; and
storing subsequently acquired temperature probe data to the second buffer.

7. The method according to claim 1, **characterized in that** when acquiring the temperature probe data, the method further comprises:
determining whether the timestamp in the acquired temperature probe data satisfies the preset time sequence; and
if not, discarding the acquired temperature probe data.

8. A temperature probe data processing device, **characterized by** comprising:
an acquisition unit, configured to acquire temperature probe data, wherein the temperature probe data are internal temperature data of a target object sampled according to a preset time sequence, and each piece of internal temperature data carries a timestamp; and/or the temperature probe data are external ambient temperature data of the target object sampled according to the preset time sequence, and each piece of external ambient temperature data carries a timestamp; and
a storage unit, configured to, when the temperature probe data at adjacent timestamps satisfy a preset condition, retain the temperature probe data at a latter timestamp, and store the temperature probe data at the latter timestamp in a first buffer, wherein the preset condition comprises: an internal temperature change of the target object represented by the temperature probe data at the adjacent timestamps is greater than a first preset value, and/or an ambient temperature change of the target object represented by the temperature probe data at the adjacent timestamps is greater than a second preset value.

9. A computer device, comprising a processor, **characterized in that** the processor, when executing a computer program stored in a memory, is configured to implement the temperature probe data processing method according to any one of claims 1 to 7.

10. A computer-readable storage medium, configured to store a computer program, **characterized in that** the computer program, when executed by a processor, is configured to implement the temperature probe data processing method according to any one of claims 1 to 7.
